# EUROPEAN PATENT APPLICATION

(11) **EP 1 274 217 A1**
(43) Date of publication of application: **08.01.2003**
(21) Application number: 01116184.1
(22) Date of filing: 04.07.2001
(51) Int. Cl.: H04M 1/18, H04M 1/02, H04B 1/38

(54) **A buoyancy device for a mobile phone**

(71) Applicant: TELEFONAKTIEBOLAGET L M ERICSSON (publ), 126 25 Stockholm (SE)
(72) Inventor: Quilisch, Hakan, 76241 Rimbo (SE); Agren, Göran, 19269 Sollentuna (SE)
(74) Representative: Stein, Jan Anders Lennart

(57) **Abstract**

A buoyancy device for an electronic hand-held unit comprises a body (2b) and a detachable battery unit (3a). In accordance with the invention, a connection device (6, 8a, 13, 15, 20) is provided for connection of the buoyancy device (2b) to the body or to the battery unit (3a), wherein it is adapted to completely cover a portion (3b) of the hand-held unit adapted to receive said battery unit (3a).

## Description

### TECHNICAL FIELD OF THE INVENTION

The present invention relates to a buoyancy device for an electronic hand-held unit having a detachable battery unit, comprising a buoyancy body.

It also relates to a hand-held unit, such as a mobile telephone, a personal computer or the like comprising a body and at least one disconnectible battery unit.

Such a buoyancy device and such a mobile telephone are known from WO 00/02427. The known buoyancy device suffers from the drawback that the therein combined battery and buoyancy device renders the telephone so bulky, that other batteries must be used when to be charged in e.g. a car holder. As a result of this, the battery has to be changed frequently, in turn causing the sealing of the combined battery and buoyancy device to be worn out. Furthermore, the combined battery and buoyancy device could not at all be charged in the car. Furthermore, such a buoyancy device can only make the telephone float, but as it is not provided with a sealing, the electronic components are not protected from humidity. Furthermore, the connection between the battery and the body is not protected from shocks, which may cause malfunction if the telephone hits the ground.

### SUMMARY OF THE INVENTION

It is an object of the invention to improve the known buoyancy device and hand-held device regarding their field properties, so that the handheld device can better withstand rugged outdoor conditions.

This object has been achieved by a buoyancy device of the initially defined kind, wherein a connection device is provided for connection of the buoyancy device to the body or to the battery unit, wherein it is adapted to completely cover a portion of the hand-held unit adapted to receive said battery unit.

It has also been achieved by a hand-held unit of the initially defined kind, further being provided with a buoyancy device comprising a connection device connected to a connector device of said body and/or said battery unit, wherein said buoyancy device is adapted to completely cover a portion of the hand-held unit adapted to receive said battery unit. Hereby is achieved that the hand-held unit is protected from shocks in the area of said portion.

Preferably, the buoyancy device is adapted to completely cover the battery unit. Hereby is achieved that also the battery unit and its connection to the printed circuit board is protected from shocks.

Suitably, the buoyancy device is provided with at least one sealing adapted to bear against the hand-held unit to seal off said portion. Hereby is achieved that said portion is protected from humidity.

Advantageously, said connection device comprises at least one screw to be received in a nut arranged in said body and/or in said battery unit.

Alternatively, said connection device comprises at least one spring-loaded coupling member provided with at least one protrusion to be introduced into an opening formed by a wall of said body and/or in said battery unit, and to be to be retained behind said wall.

Alternatively, said connection device comprises at least one hook member to be introduced into an opening formed by a wall of said body and/or in said battery unit, and to be to be retained behind said wall.

Alternatively, said connection device comprises at least one elongated protrusion adapted to be received in an elongated depression formed in said body and/or battery unit.

Alternatively, said connection device comprises at least one snap-on member adapted to be received by a corresponding member formed on said body and/or battery unit.

Hereby are achieved different ways of connecting the buoyancy device to the hand-held unit.

### DRAWING SUMMARY

In the following, the invention will be described in more detail with reference to the accompanying drawing, in which
Figures 1a - 1b are side views of a first embodiment of a mobile telephone, a battery unit and a buoyancy device,
Figure 1c is a plan rear view of the mobile telephone and the battery unit shown in figures 1a - 1b,
Figure 1d and 1e are rear and front plan views of the buoyancy device shown in figures 1a - 1b,
Figures 2a - 2b are side views of a second embodiment of a mobile telephone and a buoyancy device,
Figure 2c is a plan rear view of the mobile telephone shown in figures 2a - 2b,
Figure 2d is a plan view of the buoyancy device shown in figure 2a - 2b,
Figure 3a is a side view of a third embodiment of a mobile telephone and a buoyancy device,
Figure 3b is a plan rear view of the mobile telephone shown in figure 3a,
Figure 4a is a perspective view of a fourth embodiment of a mobile telephone and a buoyancy device, and
Figure 4b is a side view of the mobile telephone and the buoyancy device shown in figure 4a.

### DETAILED DESCRIPTION

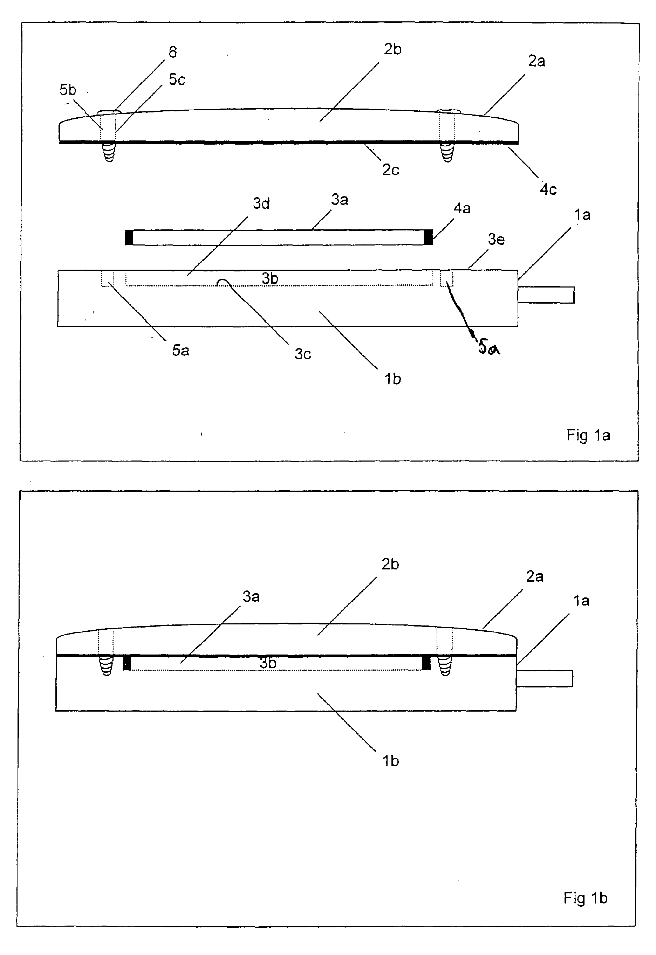

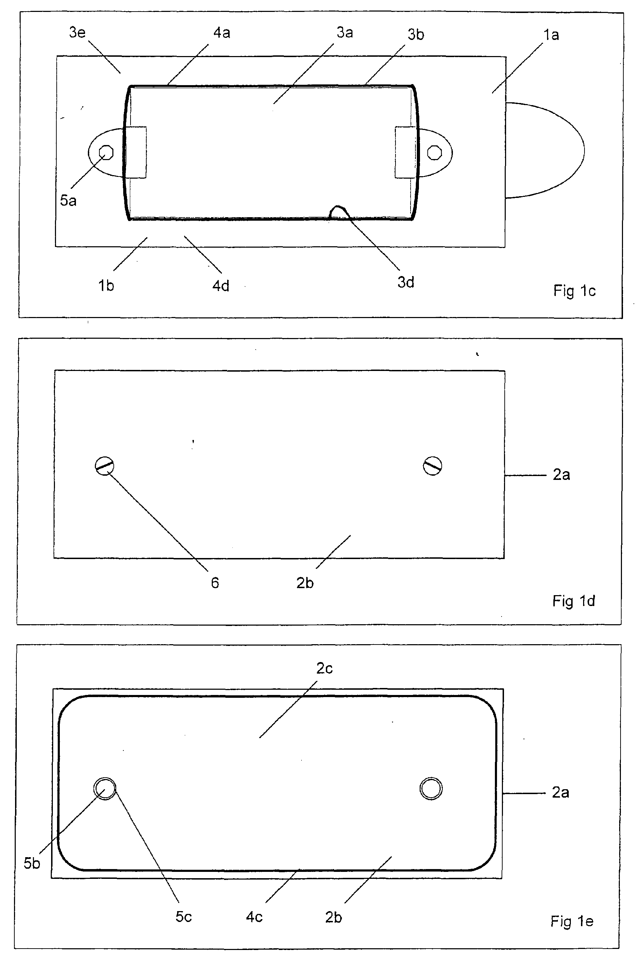

Figures 1a - 1e show a mobile telephone 1a having a body 1b, a buoyancy device 2a, having a buoyancy body 2b with a surface 2c, and a battery unit 3a arranged in a portion 3b in the form of a recess defined by a bottom 3c and a side wall 3d circumfering the bottom 3c. The upper limitation of the side walls 3d is a substantially plane surface 3e. The bottom 3c is provided with a not shown holder for a so called SIM-card, the holder being mounted on a not shown printed circuit board. In order to avoid humidity to enter the portion 3b, and thus the SIM-card and the printed circuit board, a resilient sealing 4a is provided on the battery, circumfering its side walls, to form a seal against the whole length of the side wall 3d. A sealing of this kind is provided on the battery for the mobile telephone marketed by Ericsson Mobile Communications under the brand name R310s.

A further resilient sealing 4c extending somewhat above the surface 2c is provided on the buoyancy body 2b to seal against a wall 4d constituting a sealing portion of the body 1b.

The resilient sealings 4a, 4c are preferably made of rubber, silicon or any other suitable elastomer.

The body 1a is provided with a pair of nuts 5a and the buoyancy body 2b with a pair of openings 5b, each having a sealing member 5c. A pair of screws 6 are introduced into the openings 5b, are sealed by the sealing members 5c and are screwed into the nuts 5a, the nuts 5a and the screws hence constituting connection means. Hereby, the sealing 4c is pressed together and thus constitute sealing against humidity.

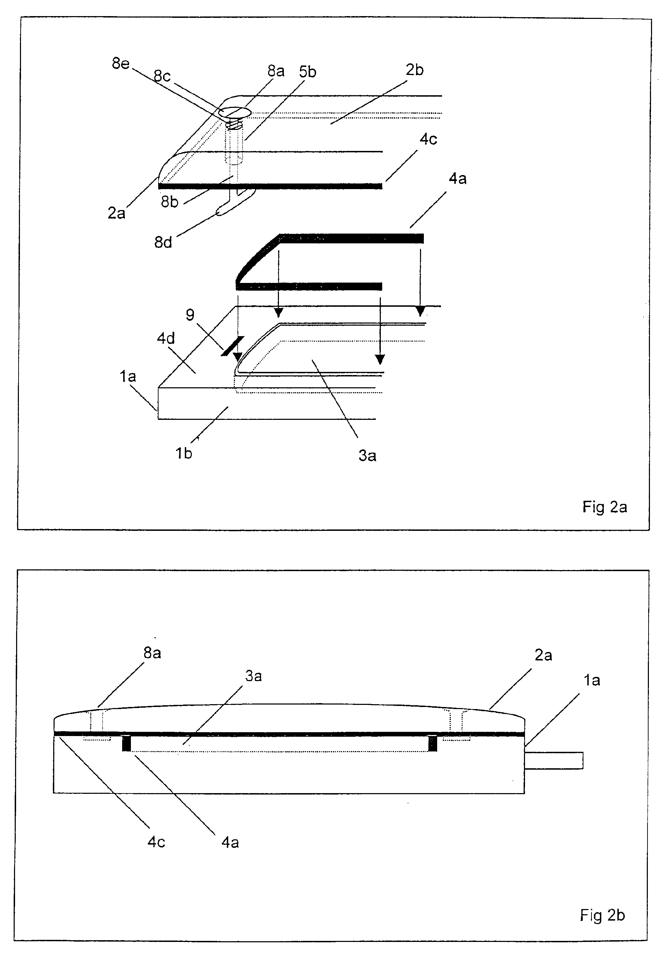

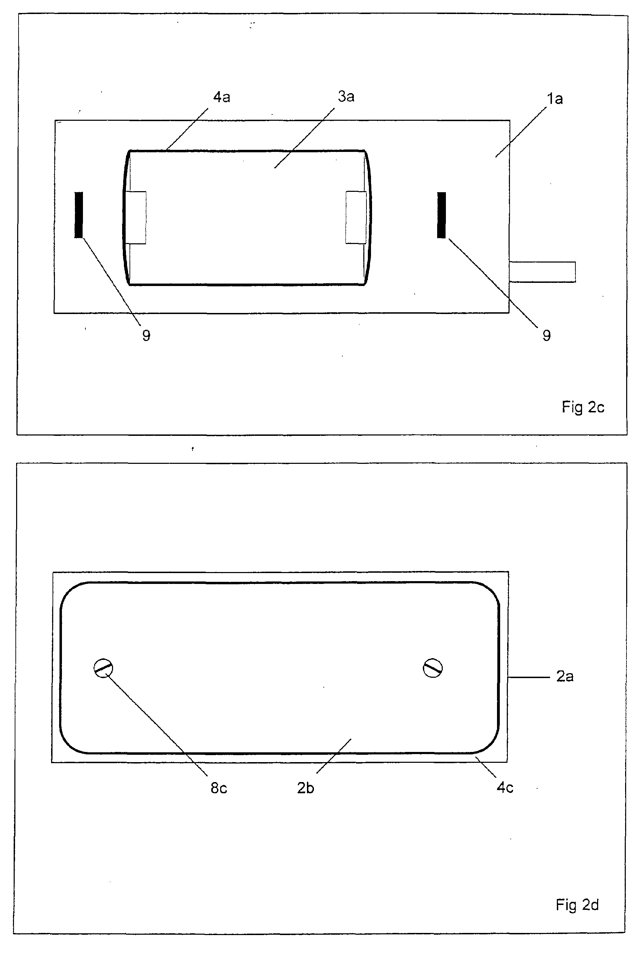

According to a second embodiment, as shown in figures 2a - 2d, the connection means of the mobile telephone 1a with the buoyancy device 2a are constituted by a pair of connectors 8a in the form of an elongated member 8b introduced into the opening 5b. Each connector is provided with a head 8c and a pair of opposedly directed protrusions 8d adapted to be introduced into an elongated slit 9 formed by the wall 4d, and to be turned such that the protrusions 8d are retained behind the wall 4d. For allowing turning of the connectors 8a, the head 8c is provided with a groove for e.g. a screw driver. A spring member 8e arranged between the head 8c and the buoyancy body 2b in order to bias the protrusions against the wall 4d. Sealings 4a, 4c are provided in the same manner as in the first embodiment.

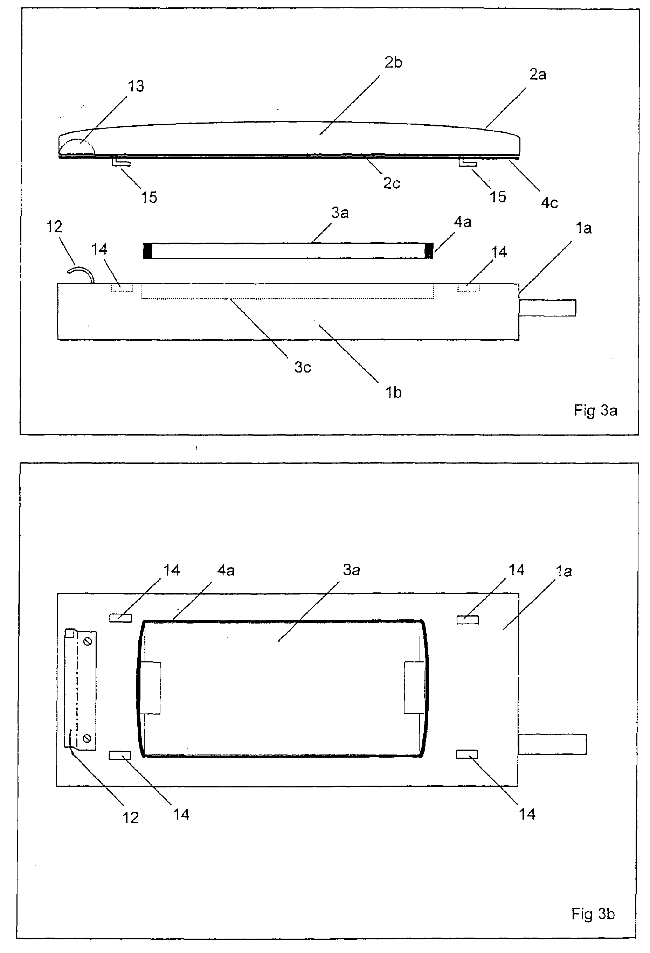

In figures 3a-3b, a third embodiment is shown, according to which the connection means is constituted by an elongated first hook 12 arranged on the mobile telephone 1a. The hook 12 is adapted to be introduced into an elongated, semi-covered opening 13 formed in the surface 2c. Furthermore, four elongated, semi-covered slits 14 formed by the wall 4d are adapted to receive four hooks 15, arranged on the buoyancy body 2b.

The resilient sealings 4a, 4c are preferably made of rubber, silicon or any other suitable elastomer.

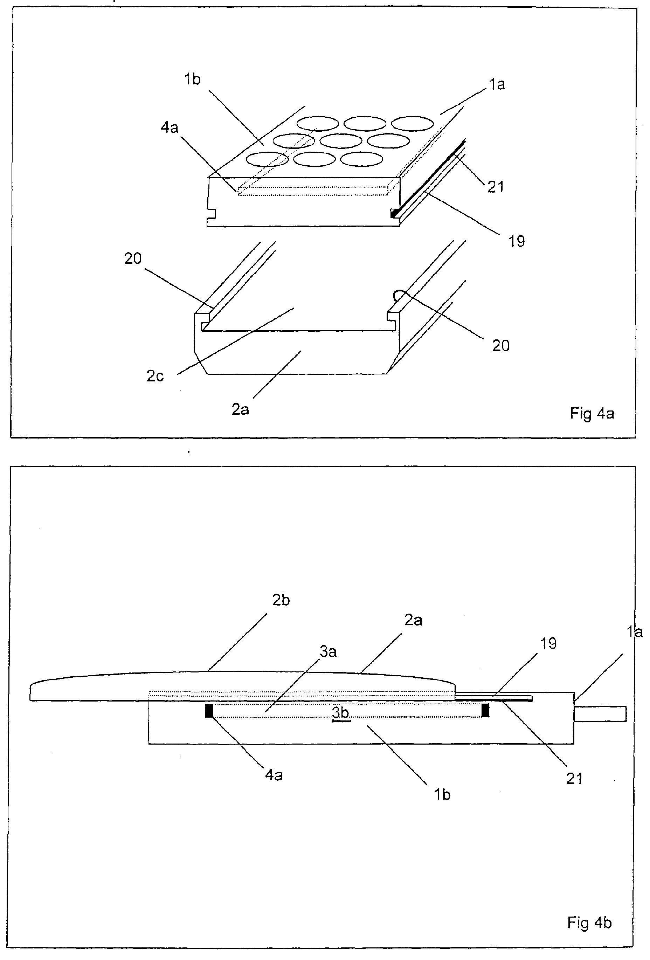

A fourth embodiment is shown in figures 4a-4b. The connection means is constituted by a pair of elongated grooves 19 formed in the sides of the body 1b. Corresponding elongated protrusions 20 directed towards one another are formed on the side 2c of the buoyancy body 2b. Thus, during connection the buoyancy body 2b is slid onto the body 1b (see figure 4b). A sealing member 21 is provided in the grooves 19 for the purposes mentioned above in connection with the first embodiment. The sealing member 4a is provided in the same manner as in the first embodiment.

If the mobile telephone in anyone of the above described embodiments is dropped on the ground, the buoyancy device protects the battery from the shock, so that the connection to the body is prevented from getting destroyed. Furthermore, the buoyancy device allows the mobile telephone to float without getting affected by water entering into the body. Furthermore, there is no need to change batteries when placing or charging the telephone in a car holder, i.e. when doing so, the buoyancy device is simply disconnected before placing the telephone in the car holder.

Of course, in all the above embodiments, it would be possible to provide only one of the sealings 4a, 4c to achieve a satisfactory sealing against humidity in most cases.

## Claims

1. A buoyancy device for an electronic hand-held unit having a detachable battery unit (3a), comprising a buoyancy body (2b), **characterised in that** a connection device (6, 8a, 13, 15, 20) is provided for connection of the buoyancy device (2b) to the body or to the battery unit (3a), wherein it is adapted to completely cover a portion (3b) of the hand-held unit adapted to receive said battery unit (3a).

2. A buoyancy device according to claim 1, wherein the buoyancy device (2b) is adapted to completely cover the battery unit (3a).

3. A buoyancy device according to claim 1 or 2, wherein it is provided with at least one sealing (4c, 21) adapted to bear against the hand-held unit to seal off said portion (3b).

4. A buoyancy device according to anyone of claims 1 to 3, wherein said connection device comprises at least one screw (6) to be received in a nut (5a) arranged in said body (1b) and/or in said battery unit (3a).

5. A buoyancy device according to anyone of claims 1 to 3, wherein said connection device comprises at least one spring-loaded coupling member (8a) provided with at least one protrusion (8d) to be introduced into an opening (9) formed by a wall (4d) of said body (1b) and/or in said battery unit (3a), and to be to be retained behind said wall (4b).

6. A buoyancy device according to anyone of claims 1 to 3, wherein said connection device comprises at least one hook member (12) to be introduced into an opening formed by a wall of said body (1b) and/or in said battery unit (3a), and to be to be retained behind said wall (4b).

7. A buoyancy device according to anyone of claims 1 to 3, wherein said connection device comprises at least one elongated protrusion (20) adapted to be received in an elongated depression (19) formed in said body (1b) and/or battery unit (3a).

8. A buoyancy device according to anyone of claims 1 to 3, wherein said connection device comprises at least one snap-on member adapted to be received by a corresponding member formed on said body and/or battery unit.

9. A hand-held unit, such as a mobile telephone, a personal computer or the like comprising a body (1b) and at least one disconnectible battery unit (3a), **characterised in that** it is provided with a buoyancy device (2a) comprising a connection device (6, 8a, 13, 15, 20) connected to a connector device (5a, 9, 12, 14, 19) of said body (1b) and/or said battery unit (3a), wherein said buoyancy device (2a) is adapted to completely cover a portion (3b) of the hand-held unit adapted to receive said battery unit (3a).

10. A hand-held unit, such as a mobile telephone, a personal computer or the like comprising a body (1b) and at least one battery unit (3a), wherein it is provided with a connector device (5a, 9, 12, 14, 19) adapted to be connected to a connection device (6, 8a, 13, 15, 20) of the buoyancy device (2a) according to anyone of claims 1-9, wherein said buoyancy device (2a) is adapted to completely cover a portion (3b) of the hand-held unit adapted to receive said battery unit (3a).

11. A hand-held unit according to claim 9 or 10, wherein the buoyancy device (2a) is adapted to completely cover the battery unit (3a).

12. A hand-held unit according to anyone of claims 9 to 11, wherein said buoyancy device (2a) is provided with a sealing (4c) adapted to bear against the hand-held unit to seal off said portion (3b).
